# EUROPÄISCHE PATENTSCHRIFT

(11) **EP 2 486 637 B1**
(45) Veröffentlichungstag und Bekanntmachung des Hinweises auf die Patenterteilung: **15.04.2015**
(21) Anmeldenummer: 10784245.2
(22) Anmeldetag: 01.10.2010
(51) Int. Cl.: H02G 15/013, H01R 13/58

(54) **KABELDURCHFÜHRUNG IN STECKVERBINDERGEHÄUSEN**
CABLE LEAD-THROUGH IN PLUG-IN CONNECTOR HOUSINGS
TRAVERSÉE DE CÂBLE DANS DES BOÎTIERS DE CONNECTEURS

(30) Priorität: 09.10.2009 DE 102009048877
(43) Veröffentlichungstag der Anmeldung: 15.08.2012
(73) Patentinhaber: Harting Electric GmbH & Co. KG, 32339 Espelkamp (DE)
(72) Erfinder: NASS, Andreas, 31606 Warmsen (DE)
(86) Internationale Anmeldenummer: PCT/DE2010/001164
(87) Internationale Veröffentlichungsnummer: WO 2011/042005

(56) Entgegenhaltungen:
- EP-A2- 0 696 827
- DE-A1- 10 054 714
- US-A- 5 632 643

## Beschreibung

Die Erfindung betrifft ein Steckverbindergehäuse, bestehend aus einem inneren Gehäuseteil und einem äußeren Gehäuseteil, wobei das innere Gehäuseteil einen Hohlraum bildet, in welchen elektrische Bauteile sowie elektrische Verbindungselemente angeordnet sind, und wobei das äußere Gehäuseteil aus einem Vergussarbeitsgang gebildet ist und das innere Gehäuseteil einschließt, und wobei das innere Gehäuseteil eine Durchführung zur Anbindung eines Kabels umfasst, wobei zwischen Kabel und Durchführung ein Dichtring angeordnet ist.

Außerdem betrifft die Erfindung ein Verfahren zur Herstellung eines oben beschriebenen Steckverbindergehäuses.

Steckverbinder werden benötigt, um Leitungen miteinander zu verbinden oder zu trennen. Die Leitungen können zum Transport von elektrischen Strom aber auch für andere Medien (beispielsweise für optische Strahlung, als Lichtwellenleiter) dienen.

### Stand der Technik

Aus der DE 38 23 598 A1 ist ein Steckverbinder bekannt, der aus einem inneren und einem äußeren Gehäuseteil besteht. Das innere Gehäuseteil weist eine Kabeldurchführung aus, in welcher eine Labyrinthdichtung eingebracht ist. Das äußere Gehäuseteil wird durch ein so genanntes Spritzgussverfahren auf das innere Gehäuseteil aufgebracht.

Das Umspritzen von Steckverbindern ist durchaus Stand der Technik. Zu diesem Spritzvorgang sind Kunststoffe erforderlich, die je nach Kunststoff bei etwa 180 - 400 °C mit einem Druck von 15 - 400 bar in eine entsprechende Form mit den darin gehaltenen Elementen eingespritzt werden.

Aus der EP0 696 827 A2 ist ein Steckverbindergehäuse gemäß dem Oberbegriff des Anspruchs 1 bekannt.

Im Einsatz hat sich bei den Steckverbindern des Standes der Technik allerdings gezeigt, dass die Dichtfunktion der Kabeldurchführungsdichtung im Laufe der Zeit nachlässt.

### Aufgabenstellung

Der Erfindung liegt daher die Aufgabe zugrunde, eine Dichtung für eine Kabeldurchführung eines Steckverbindergehäuses vorzuschlagen, welche die oben genannten Nachteile des Standes der Technik verringert.

Diese Aufgabe wird dadurch gelöst, dass ein Dichtring in einer Kontur des inneren Gehäuseteils formschlüssig eingebracht ist und der Dichtring mit dem äußeren Gehäuseteil und einer Kabelzugentlastung schmelzverbunden ist.

Vorteilhafte Ausgestaltungen der Erfindung sind in den Ansprüchen 2 - 4 sowie 6-9 angegeben.

Der erfindungsgemäße Steckverbinder besteht aus einem inneren Gehäuseteil welches Kupplungselemente zum Anschluss der anzuschließenden Leiter umfasst. Das innere Gehäuseteil wird in einem Vergußarbeitsgang mit einem äußeren Gehäuseteil ummantelt. Dabei wird der Dichtring in einer Kontur des ersten Gehäuseteils formschlüssig eingebracht und mit dem zweiten Gehäuseteil während des Umgießvorganges schmelzverbunden.

Unter Schmelzverbindung wird in diesem Zusammenhang sowohl ein Ineinanderfließen zweier Materialien - in diesem Fall der Materialien des Dichtringes und des äußeren Gehäuses - wie auch das Hineinfließen eines Materials in die Oberflächenstruktur eines anderen Materials verstanden. Bei Ersteren fließen die Materialien ineinander und härten anschließend aus, so das eine feste Verbindung entsteht. Bei Letzterem ist ein Material flüssig und fließt in die Oberflächenstruktur (Poren, Öffnungen) des Verbindungspartners, der selber im festen (ungeschmolzenen oder lediglich angeschmolzenen) Zustand verbleibt. Durch Aushärtung des Materials entsteht ebenfalls eine feste Verbindung zwischen den Partnern. Dies kann auch als Verkleben der Verbindungspartner verstanden werden. Bei allen vorgenannten Schmelzverbindungen können auch kovalente Bindungen zwischen den Verbindungspartnern durch eine chemische Vernetzung entstehen.

Das Umgießen des inneren Gehäuseteils kann sowohl im Spritzgußverfahren als auch in einem Vergußarbeitsgang erfolgen.

Das Spritzgußverfahren wurde bereits oben hinreichend erläutert. Bei einem Vergußarbeitsgang wird ein Werkzeug um das innere Gehäuseteil gelegt. Der Hohlraum zwischen Werkzeug und innerem Gehäuseteil wird vorzugsweise mit einem niederviskosen, reaktivem Kunststoff umgossen. Nach dem Aushärten des Kunststoffes bildet dieser das äußere Gehäuseteil des Steckverbindergehäuses.

In einer vorteilhaften Ausführungsform der Erfindung besteht das äußere Gehäuseteil aus einem Polyurethan-Kunststoff.

Dazu wird das innere Gehäuseteil mit zwei Komponenten, einem Isocyanat und einem Polyol umgossen. Vorzugsweise liegt die Temperatur der beiden Komponenten dabei zwischen 60° und 95°C. In einer Reaktion verbinden sich die beiden Materialien zum Polyurethan.

Derartige Polyurethangehäuse sind besonders kratzfest und bruchstabil. Durch die niedrige Viskosität und das gute Fliessverhalten des viskosen Polyurethans können außerdem dünne Wandstärken sowie Unterschiede in der Wanddicke und eine gute Abformbarkeit von Gehäusesonderheiten, wie z.B. ein Firmenlogo erzielt werden, so dass nur ein Gießvorgang zur Formgebung des Gehäuses erforderlich ist. Bei den Umspritzverfahren des Standes der Technik sind oft zwei Umspritzvorgänge mit unterschiedlichen Materialien (Kunststoffen) notwendig.

In einer weiteren vorteilhaften Ausführungsform der Erfindung besteht der Dichtring ebenfalls aus einem Polyurethan-Kunststoff. Wenn der Dichtring aus demselben Polyurethan-Kunststoff besteht wie das äußere Gehäuseteil, kann eine besonders stabile Schmelzverbindung zwischen Gehäuseteil und Dichtring entstehen.

In einer vorteilhaften Ausführungsform der Erfindung besteht der Dichtring aus einem Schaumstoffmaterial. Besonders vorteilhaft ist es, wenn es sich dabei um einen Intergralschaumstoff handelt. Bei Erzeugnissen aus Integralschaum nehmen die Gaseinschlüsse zur Oberfläche des Erzeugnisses ab. Bei dem hier verwendeten Dichtring sollte die Größe der Gaseinschlüsse in Richtung des Kabelmantels abnehmen. So schließt der Dichtring optimal mit der Kabelmanteloberfläche ab und kann eine stabile Schmelzverbindung mit dem Vergussgehäuse (also dem äußeren Gehäuseteil) eingehen. Außerdem wird so eine chemische Vernetzung der Verbindungspartner gefördert.

Dichtringe aus Polyurethan - und besonders solche aus Polyurethanschaum - haben den weiteren Vorteil, dass sie formatvariabler sind als herkömmliche Gummi-Dichtringe. Das bedeutet, dass Kabel mit unterschiedlichem Durchmesser - während der Herstellung des Steckverbinders - mit einem Polyurethan-Dichtring gleichen Durchmessers versehen werden können. Bislang musste bei einer Durchmesseränderung des Kabels auch ein anderer Gummidichtring mit angepasstem Durchmesser verwendet werden.

In einer besonders bevorzugten Weiterbildung der Erfindung weist der Dichtring eine Labyrinthstruktur auf. Vorteilhafterweise ist die Labyrinthstruktur derart ausgebildet, dass Öffnungen vorhanden sind, in welchen Vergußmaterial - aus welcher das äußere Gehäuseteil besteht - einfließen kann. Dabei erweist sich das Polyurethan als vorteilhaftes Vergußmaterial. Die Reaktionszeit der beiden Komponenten - aus welchen das Polyurethan gebildet wird - kann, beispielsweise durch das Verhältnis der einzelnen Komponenten zueinander oder durch die Temperatur derselben, so gesteuert werden, dass eine bestimmte (gewollte) Menge an Vergußmaterial in die Dichtringporen eindringt.

Das Steckverbindergehäuse umfasst eine Kabelzugentlastung. Hierfür ist das äußere Gehäuseteil gegenüber dem inneren Gehäuseteil in Richtung des Kabels verlängert ausgeführt und mit der Kabelummantelung schmelzverbunden.

### Ausführungsbeispiel

Ein Ausführungsbeispiel der Erfindung ist in der Zeichnung dargestellt und wird im Folgenden näher erläutert. Es zeigen:
- Fig. 1: Ein inneres und ein äußeres Gehäuse in einem Vergusswerkzeug, teilweise geschnitten
- Fig. 2: Ein fertiges Steckverbindergehäuse, perspektivisch dargestellt
- Fig. 3: Eine Schnittdarstellung der Kabeldurchführung des Steckverbindergehäuses vor dem Umgiessvorgang
- Fig. 4: Eine Schnittdarstellung der Kabeldurchführung des Steckverbindergehäuses nach dem Umgiessvorgang

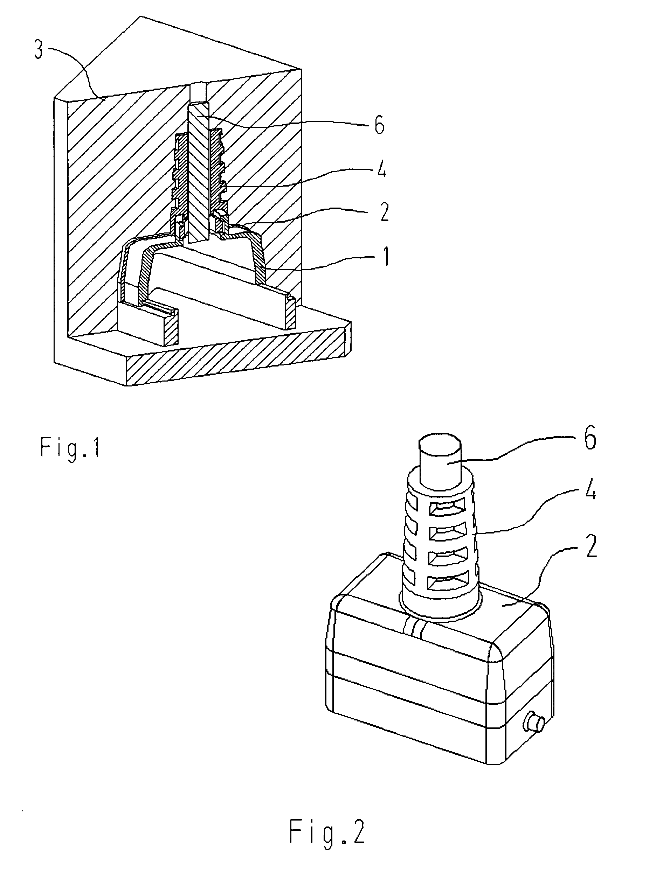

In der Fig.1 ist ein inneres Gehäuseteil 1 und ein äußeres Gehäuseteil 2 innerhalb eines Vergusswerkzeuges 3 in gestaffelten Schnitten dargestellt, so dass sowohl das innere 1 wie auch das äußere Gehäuse 2 ersichtlich ist. Das Vergusswerkzeug 3 umfasst nicht dargestellte Einlassöffnungen, in welchen das Vergussmaterial zur Bildung des äußeren Gehäuses einfließen kann.

Die Fig. 2 zeigt das fertige Steckverbindergehäuse. Zu sehen ist jetzt lediglich das ummantelnde äußere Gehäuseteil 2 sowie eine Kabelzugentlastung 4 für das Kabel 6.

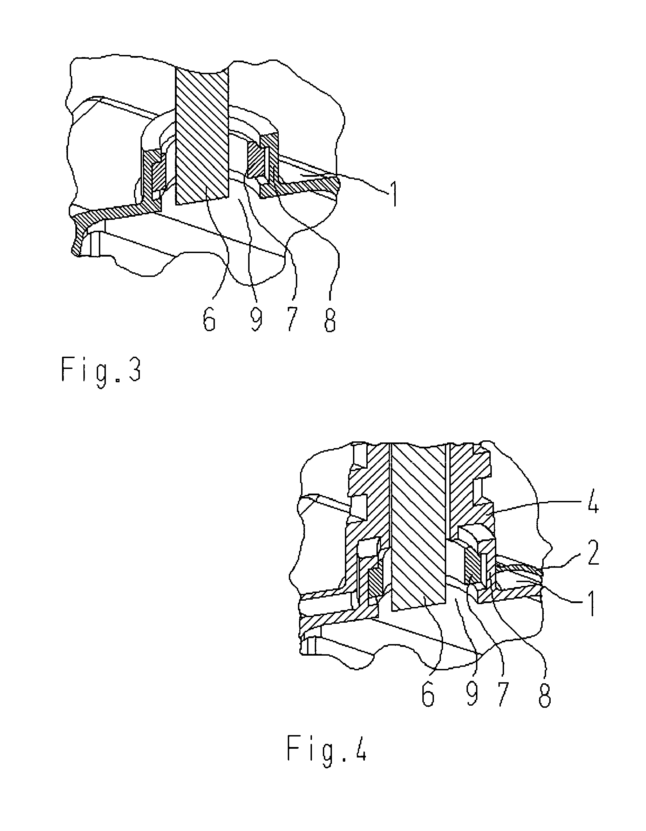

Die Figur 3 zeigt eine Schnittdarstellung der Kabeldurchführung 9 des Steckverbindergehäuses vor dem Umgiessvorgang. Das innere Gehäuseteil 1 umfasst eine Kontur bzw. Nut 8, in welcher ein Dichtring 7 zur Abdichtung der Kabeldurchführung 9 vor der Außenwelt, eingebracht ist. Zur Bildung des äußeren Gehäuseteils wird in das Werkzeug gleichzeitig ein Isocyanat und ein Polyol eingelassen. Durch eine so genannte Polyadditionsreaktion bildet sich Polyurethan-Kunststoff, der in die nicht gezeigten Öffnungen bzw. Poren des Dichtringes 7 einfließen kann. Das äußere Gehäuseteil 2 wird dabei mit dem Dichtring 7 schmelzverbunden. Gleichzeitig wird bei dem Giesvorgang eine so genannte Zugentlastung 4 für das Kabel 6 gebildet (Figur 4).

### Bezugszeichenliste

### Kabeldurchführung in Steckverbindergehäusen

Az.: P 209-14 EP P H
1. inneres Gehäuseteil
2. äußeres Gehäuseteil
3. Vergusswerkzeug
4. Kabelzugentlastung
5. .
6. Kabel
7. Dichtring
8. Kontur / Nut des inneren Gehäuseteils
9. Kabeldurchführung

## Patentansprüche

1. Steckverbindergehäuse, welches ein inneres Gehäuseteil (1) und ein äußeres Gehäuseteil (2) umfasst, wobei das innere Gehäuseteil (1) einen Hohlraum bildet, in welchem elektrische Bauteile sowie elektrische Verbindungselemente angeordnet sind, und wobei das äußere Gehäuseteil (2) aus einem Vergussarbeitsgang gebildet ist und das innere Gehäuseteil (1) einschließt, und wobei das innere Gehäuseteil (1) eine Durchführung (9) zur Anbindung eines Kabels (6) umfasst, wobei zwischen Kabel (6) und Durchführung (9) ein Dichtring (7) angeordnet ist, wobei das äußere Gehäuseteil (2) eine Kabelzugentlastung (4) umfasst, die mit dem Mantel des anzuschließenden Kabels (6) schmelzverbunden ist **dadurch gekennzeichnet, dass**
der Dichtring (7) in einer Kontur (8) des inneren Gehäuseteils (1) formschlüssig eingebracht ist und dass der Dichtring (7) mit dem äußeren Gehäuseteil (2) und der Kabelzugentlastung (4) schmelzverbunden ist.

2. Steckverbindergehäuse nach Anspruch 1, **dadurch gekennzeichnet, dass** das äußere Gehäuseteil (2) aus einem Polyurethan-Kunststoff besteht.

3. Steckverbindergehäuse nach einem der vorstehenden Ansprüche, **dadurch gekennzeichnet, dass** der Dichtring (7) aus einem Polyurethan-Kunststoff besteht.

4. Steckverbindergehäuse nach einem der vorstehenden Ansprüche, **dadurch gekennzeichnet, dass** der Dichtring (7) aus einem Schaumstoff gebildet ist.

5. Verfahren zur Herstellung eines Steckverbindergehäuses, wobei ein inneres Gehäuseteil (1), welches einen Hohlraum bildet, in welchem elektrische Bauteile sowie elektrische Verbindungselemente angeordnet sind, von einem äußeren Gehäuseteil (2) in einem Vergussarbeitsgang einschgeschlossen wird, wobei in einer Durchführung (9) des ersten Gehäuseteils (1) ein Dichtring (7) eingebracht wird, in welchem (7) ein Kabel (6) geführt wird wobei im Vergussarbeitsgang am äußere Gehäuseteil (2) eine Kabelzugentlastung (4) gebildet wird, die mit dem Mantel des anzuschließenden Kabels (6) schmelzverbunden wird, **dadurch gekennzeichnet, dass** der Dichtring (7) in einer Kontur (8) des inneren Gehäuseteils (1) formschlüssig eingebracht und anschließend mit dem zweiten Gehäuseteil (2) und der Kabelzugentlastung (4) schmelzverbunden wird.

6. Verfahren zur Herstellung eines Steckverbindergehäuses nach vorstehendem Anspruch, **dadurch gekennzeichnet, dass** das äußere Gehäuseteil (2) innerhalb eines dazu vorgesehenen Werkzeugs (3) um das innere Gehäuseteil (1) herum gegossen wird.

7. Verfahren zur Herstellung eines Steckverbindergehäuses nach vorstehendem Anspruch, **dadurch gekennzeichnet, dass** das äußere Gehäuseteil (2) aus zwei Komponenten gebildet wird, die sich in einer chemischen Reaktion zu einem Kunststoff, vorzugsweise Polyurethan-Kunststoff verbinden.

8. Verfahren zur Herstellung eines Steckverbindergehäuses nach vorstehendem Anspruch, **dadurch gekennzeichnet, dass** die Temperatur der zwei Komponenten, die nach ihrer Reaktion das äußere Gehäuseteil (2) bilden, vor dem Eingießen in das Werkzeug (3) zwischen 60° und 95° eingestellt wird.

9. Verfahren zur Herstellung eines Steckverbindergehäuses nach einem der vorstehenden Ansprüche, **dadurch gekennzeichnet, dass** die Struktur des Dichtringes (7) derart ausgeformt ist, dass ein gezieltes Eindringen der Vergussmasse in das erste Gehäuseteil (1) ermöglicht wird.

## Claims

1. A plug connector housing, comprising an inner housing part (1) and an outer housing part (2), the inner housing part (1) defining a cavity in which electrical components and electrical connecting elements are arranged, and the outer housing part (2) being formed based on a potting operation and enclosing the inner housing part (1), and the inner housing part (1) comprising a lead-through (9) for coupling a cable (6), a sealing ring (7) being arranged between the cable (6) and the lead-through (9), the outer housing part (2) comprising a cable strain relief (4) which is fusion-bonded to the sheath of the cable (6) to be connected, **characterized in that**
the sealing ring (7) is incorporated in a form-fitting manner in a contour (8) of the inner housing part (1), and **in that** the sealing ring (7) is fusion-bonded to the outer housing part (2) and the cable strain relief (4).

2. The plug connector housing according to claim 1, **characterized in that** the outer housing part (2) consists of a polyurethane plastic material.

3. The plug connector housing according to either of the preceding claims, **characterized in that** the sealing ring (7) consists of a polyurethane plastic material.

4. The plug connector housing according to any of the preceding claims, **characterized in that** the sealing ring (7) is formed from a foamed material.

5. A method of manufacturing a plug connector housing, wherein an inner housing part (1) defining a cavity in which electrical components and electrical connecting elements are arranged is enclosed by an outer housing part (2) in a potting operation, wherein a sealing ring (7) is incorporated in a lead-through (9) of the first housing part (1), a cable (6) being guided in the sealing ring (7), wherein in the potting operation a cable strain relief (4) is formed on the outer housing part (2) and is fusion-bonded to the sheath of the cable (6) to be connected, **characterized in that** the sealing ring (7) is incorporated in a form-fitting manner in a contour (8) of the inner housing part (1) and is subsequently fusion-bonded to the second housing part (2) and the cable strain relief (4).

6. The method of manufacturing a plug connector housing according to the preceding claim, **characterized in that** the outer housing part (2) is molded, within a tool (3) provided for this purpose, around the inner housing part (1).

7. The method of manufacturing a plug connector housing according to the preceding claim, **characterized in that** the outer housing part (2) is formed from two components which combine to form a plastic material, preferably polyurethane plastic material, in a chemical reaction.

8. The method of manufacturing a plug connector housing according to the preceding claim, **characterized in that** the temperature of the two components which after their reaction define the outer housing part (2) is set between 60° and 95° prior to pouring into the tool (3).

9. The method of manufacturing a plug connector housing according to any of the preceding claims, **characterized in that** the structure of the sealing ring (7) is shaped such as to allow a purposeful penetration of the potting compound into the first housing part (1).

## Revendications

1. Boîtier de connecteur enfichable, comportant une partie de boîtier intérieure (1) et une partie de boîtier extérieure (2), la partie de boîtier intérieure (1) formant une cavité dans laquelle sont agencés des composants électriques tels que des éléments de raccordement électriques, et la partie de boîtier extérieure (2) étant formée dans une opération de coulage et renfermant la partie de boîtier intérieure (1), et la partie de boîtier intérieure (1) comportant un passage (9) pour le raccordement d'un câble (6), une bague d'étanchéité (7) étant agencée entre le câble (6) et le passage (9), la partie de boîtier extérieure (2) comportant une décharge de traction de câble (4) qui est reliée à la gaine du câble à raccorder (6) par fusion, **caractérisé en ce que**
la bague d'étanchéité (7) est insérée dans un contour (8) de la partie de boîtier intérieure (1) par coopération de formes, et **en ce que** la bague d'étanchéité (7) est reliée à la partie de boîtier extérieure (2) et à la décharge de traction de câble (4) par fusion.

2. Boîtier de connecteur enfichable selon la revendication 1, **caractérisé en ce que** la partie de boîtier extérieure (2) est réalisée en une matière plastique de polyuréthane.

3. Boîtier de connecteur enfichable selon l'une des revendications précédentes, **caractérisé en ce que** la bague d'étanchéité (7) est réalisée en une matière plastique de polyuréthane.

4. Boîtier de connecteur enfichable selon l'une des revendications précédentes, **caractérisé en ce que** la bague d'étanchéité (7) est réalisée en une mousse.

5. Procédé de fabrication d'un boîtier de connecteur enfichable, une partie de boîtier intérieure (1) formant une cavité dans laquelle des composants électriques tels que des éléments de raccordement électriques sont agencés, étant renfermée par une partie de boîtier extérieure (2) dans une opération de coulage, une bague d'étanchéité (7) étant insérée dans un passage (9) de la première partie de boîtier (1), dans laquelle (7) un câble (6) est guidé, une décharge de traction de câble (4) étant réalisée sur la partie de boîtier extérieure (2) lors de l'opération de coulage, laquelle est reliée à la gaine du câble à raccorder (6) par fusion, **caractérisé en ce que** la bague d'étanchéité (7) est insérée dans un contour (8) de la partie de boîtier intérieure (1) par coopération de formes et est ensuite reliée à la deuxième partie de boîtier (2) et à la décharge de traction de câble (4) par fusion.

6. Procédé de fabrication d'un boîtier de connecteur enfichable selon la revendication précédente, **caractérisé en ce que** la partie de boîtier extérieure (2) est coulée à l'intérieur d'un outil (3) prévu à cet effet autour de la partie de boîtier intérieure (1).

7. Procédé de fabrication d'un boîtier de connecteur enfichable selon la revendication précédente, **caractérisé en ce que** la partie de boîtier extérieure (2) est composée de deux composants qui se combinent en une matière plastique, de préférence une matière plastique de polyuréthane lors d'une réaction chimique.

8. Procédé de fabrication d'un boîtier de connecteur enfichable selon la revendication précédente, **caractérisé en ce que** la température des deux composants formant la partie de boîtier extérieure (2) après leur réaction est réglée entre 60° et 95°avant le coulage dans l'outil (3).

9. Procédé de fabrication d'un boîtier de connecteur enfichable selon l'une des revendications précédentes, **caractérisé en ce que** la structure de la bague d'étanchéité (7) est réalisée de manière à permettre une pénétration ciblée de la masse de coulage dans la première partie de boîtier (1).
